# EUROPÄISCHE PATENTSCHRIFT

(11) **EP 3 215 347 B1**
(45) Veröffentlichungstag und Bekanntmachung des Hinweises auf die Patenterteilung: **19.07.2023**
(21) Anmeldenummer: 15784566.0
(22) Anmeldetag: 15.10.2015
(51) Int. Cl.: C08K 9/02, C08K 3/013, C08K 3/22, B41M 5/26

(54) **LASERMARKIERBARE UND LASERSCHWEISSBARE POLYMERE MATERIALIEN**
LASER-MARKABLE AND LASER-WELDABLE POLYMER MATERIALS
MATÉRIAUX POLYMÈRES POUVANT ÊTRE MARQUÉS ET SOUDÉS AU LASER

(30) Priorität: 05.11.2014 DE 102014016286
(43) Veröffentlichungstag der Anmeldung: 13.09.2017
(73) Patentinhaber: Merck Patent GmbH, 64293 Darmstadt (DE)
(72) Erfinder: RUEGER, Reinhold, 63322 Roedermark (DE); QUITTMANN, Ulrich, 65439 Floersheim (DE)
(86) Internationale Anmeldenummer: PCT/EP2015/002032
(87) Internationale Veröffentlichungsnummer: WO 2016/070954

(56) Entgegenhaltungen:
- WO-A1-2005/084955
- DE-A1-102005 011 180
- DE-U1-202004 016 363

## Beschreibung

Die vorliegende Erfindung betrifft farbige lasermarkierbare und laserschweißbare polymere Materialien, die sich dadurch auszeichnen, dass sie als Absorber mindestens ein dotiertes Zinnoxid oder Indiumoxid mit einer hohen spezifischen Oberfläche enthalten.

Die Kennzeichnung von Produktionsgütern wird in fast allen Industriezweigen zunehmend wichtiger. So müssen häufig z. B. Produktionsdaten, Chargennummern, Verfallsdaten, Barcodes, 2D-Codes, Firmenlogos, Seriennummern, auf Kunststoffteilen aufgebracht werden. Wachsende Bedeutung gewinnt dabei die berührungslose, sehr schnelle und flexible Markierung mit Lasern. Mit dieser Technik ist es möglich, Beschriftungen mit hoher Geschwindigkeit auch auf eine nicht plane Oberfläche aufzubringen. Da sich die Beschriftung im Kunststoffkörper selbst befindet, ist sie dauerhaft abriebbeständig.

Da viele Kunststoffe für Laserlicht durchlässig sind, werden den Kunststoffen meist lasersensitive Mittel zugesetzt, die durch Absorption der Laserenergie im Kunststoffmaterial entweder direkt durch Wechselwirkung mit dem Polymer oder indirekt mit einem zugesetzten Material eine lokale, gut sichtbare Verfärbung hervorrufen. Das lasersensitive Mittel kann ein organischer Farbstoff oder ein Pigment sein, welches Laserlicht absorbiert. Für die Verfärbung kann es verschiedene Ursachen geben, z. B. die Zersetzung des Polymeren oder der Absorber selbst wird von einer unsichtbaren in eine sichtbare Form umgewandelt. In der Regel kommt es zu einer Dunkelfärbung des Kunststoffs durch Carbonisierung in Folge der eingetragenen Laserenergie.

Es sind zahlreiche Additive für die Lasermarkierung von Kunststoffen bekannt. Für die Markierung mit Nd-YAG-Lasern (Neodym-dotierte Yttrium-Aluminium-Granat-Laser), YVO₄-Laser (Yttrium-Vanadat-Laser) und 1064 nm-Faserlaser eignen sich vorzugsweise Materialien, die Licht der Wellenlänge 1064 nm absorbieren und selbst nur eine geringe Eigenfarbe aufweisen. Beispiele sind Kupferphosphate, Bismutoxid, Bismutoxichlorid, antimondotiertes Zinnoxid auf Glimmer oder Metalle. In der EP 1 377 522 A2 werden Additive für die Lasermarkierung von Kunststoffen beschrieben, die aus kalziniertem Antimon-Zinn-Mischoxid bestehen, in welchem die Antimonkonzentration an der Oberfläche höher ist als in den Teilchen als Ganzes. Die Teilchengröße beträgt 0,1- 10 µm, vorzugsweise 0,5 - 5 µm. Mit dem Additiv werden dunkle Markierungen auf hellen Hintergründen erhalten. Helle Markierungen werden nicht erhalten.

In der EP 1 720 712 A1 werden hochtransparente lasermarkierbare und laserschweißbare Kunststoffmaterialien beschrieben, die dotierte Zinnoxide, Antimonoxide oder Indiumoxide mit einer Partikelgröße von 1 - 100 nm enthalten und deren Transparenz bei einer Dicke von 2 mm mehr als 85 % beträgt und weniger als 3 % Haze zeigen. Die EP 1 720 712 A1 lehrt, dass bei der Lasermarkierung eine dunkle Markierung vor hellem Hintergrund und ein hoher Kontrast gewünscht sind. Die erhaltenen Markierungen sind dunkel. In der Patentanmeldung wird weiter ausgeführt, dass mit Pigmenten aus größeren Partikeln oder aggregierten Partikeln aus Primärpartikeln kleiner 80 µm keine transparenten Kunststoffartikel hergestellt werden können.

Auf bunten oder dunkel eingefärbten Kunststoffteilen sind dunkle Markierungen aber nur schwer zu erkennen. Beispiele für dunkle oder bunte Kunststoffteile sind Kabelisolierungen, Tastaturen oder dunkel gefärbte Kunststoffrohre. Hier ist eine helle, möglichst weiße Beschriftung gewünscht, weil diese vor dem dunklen Hintergrund wesentlich kontrastreicher erscheint als eine graue oder schwarze Markierung. Helle Markierungen können durch Aufschäumen von Kunststoffen mittels Laserbestrahlung erzeugt werden. Dies ist aber auf wenige Polymertypen beschränkt und führt zu einer starken Veränderung der Oberfläche durch die Schaumbildung. Die mechanische Festigkeit der Oberfläche wird damit vermindert.

WO 2011/085779 A1 beschreibt Materialien und ein Verfahren zur Erzeugung einer hellen Lasermarkierung. Dabei werden Partikel eingesetzt, die aus einem weißen Kern und einer vorzugsweise schwarzen oder grauen Hülle, die sich durch Laserbestrahlung entfärben lässt, bestehen. Die dunkle Hülle enthält Kohlenstoff, z. B. als Ruß.

Die in der WO 2011/085779 A1 beschriebenen Materialien haben den Nachteil, dass sie dunkelgrau bis schwarz sind und damit ist die farbliche Gestaltung der Kunststoffteile wesentlich eingeschränkt.

Insbesondere rote, braune, blaue und grüne Farbtöne sind damit nicht oder nur eingeschränkt machbar.

Es besteht daher weiterhin ein Bedarf an Laseradditiven, die insbesondere auf farbigen oder dunklen Untergründen durch Laserbeschuss zu einer hellen bis weißen Markierung führen, welche auch unter mechanischer Belastung über einen langen Zeitraum erhalten bleibt.

Aufgabe der vorliegenden Erfindung ist es daher, ein Verfahren zur Erzeugung von kontrastreichen und mechanisch stabilen hellen Markierungen auf bunten oder dunklen Kunststoffgegenständen zu finden. Eine weitere Aufgabe der Erfindung ist die Bereitstellung eines Laseradditivs, das keine oder nur eine geringe Eigenfarbe aufweist und unter Einwirkung von Laserlicht im damit dotierten Polymer sehr gute Markierergebnisse, insbesondere kontrastreiche, insbesondere scharfe und helle Markierungen, auf buntem oder dunklem Grund liefert und in einer breiten Palette von Kunststoffen eingesetzt werden kann.

Eine weitere Aufgabe der vorliegenden Erfindung ist es, ein Verfahren zur Herstellung eines solchen Laseradditivs zur Verfügung zu stellen.

Überraschenderweise wurde gefunden, dass sich bunt oder dunkel eingefärbte Kunststoffartikel durch Bestrahlung mit Laserlicht hell markieren lassen, wenn der farbige Kunststoff ein dotiertes Zinnoxid (z. B. FTO, ATO) oder Indiumzinnoxid (ITO) mit einer hohen spezifischen Oberfläche in geringer Konzentration enthält.

Gegenstand der Erfindung ist somit gemäß Anspruch 1 ein lasermarkierbares polymeres Material, dadurch gekennzeichnet, dass das Polymer ein Farbmittel und als Absorber ein dotiertes Zinnoxid oder Indiumzinnoxid (ITO) mit einer spezifischen Oberfläche (BET, N₂-Absorption) von mindestens 15 m²/g enthält.

Wesentlich für die Wirkung des Laseradditivs in Richtung einer hellen Markierung ist neben der Dotierung die spezifische Oberfläche der Partikel. Helle Markierungen mit gutem Kontrast werden dann erhalten, wenn die Partikel eine spezifische Oberfläche von wenigstens 15 m²/g, vorzugsweise 20 m²/g oder mehr, aufweisen. Besonders bevorzugt sind Teilchen mit einer spezifischen Oberfläche von mindestens 25 m²/g. Neben dem Laseradditiv enthält der Kunststoff noch ein oder mehrere Farbmittel. Ohne ein Farbmittel ist der Kunststoff hell und transparent bis opak. Zwar werden auch ohne Farbmittel in Gegenwart der erfindungsgemäßen Pigmente und bei Verwendung geeigneter Belichtungsparameter helle Markierungen erhalten, diese sind aber wegen des geringen Kontrastes gegen den Hintergrund schwer zu erkennen und für eine praktische Anwendung wenig relevant.

Bevorzugte Farbmittel für die Einfärbung der Kunststoffe sind solche, die bei der Wellenlänge des Laserlichtes selbst nur wenig oder vorzugsweise gar kein Licht absorbieren. Geeignete Farbmittel sind insbesondere organische Farbstoffe und Pigmente, die dem Fachmann in großer Zahl zur Verfügung stehen.

Die Laserpigmente mit hoher spezifischer Oberfläche
können im einfachsten Fall aus nanoskaligen Partikeln (< 100 nm) mit entsprechend großer spezifischer Oberfläche bestehen, vorzugsweise bestehen die Pigmente aber aus größeren porösen Aggregaten von Primärpartikeln, die nanoskalig sein können. Beim Einarbeiten in einen Kunststoff werden die Aggregate teilweise durch die Scherkräfte zerkleinert, jedoch nicht bis hinunter zu den Primärpartikeln. Bei der Einarbeitung in Lacke oder in Gießharze werden die Partikel geringeren Scherkräften ausgesetzt und die Partikelgröße der Aggregate bleibt im Wesentlichen unverändert.

Für die Erzeugung einer hellen Markierung ist die Teilchengröße der Partikel jedoch nicht entscheidend, sondern die spezifische Oberfläche der Partikel ist das entscheidende Merkmal für die Ausbildung einer hellen Markierung unter Laserbeschuss. Bei Partikeln mit großer Oberfläche ist die im Verhältnis zur Oberfläche des Teilchens aus dem Laserlicht aufgenommene Energiemenge zu gering für eine Carbonisierung der Polymermatrix um die Teilchen herum. Auch das Ausgasen von verdampfbaren Stoffen aus den Poren unter Laserbeschuss ist für die Ausbildung von hellen Markierungen mit porösen Partikeln von Bedeutung.

Allerdings ist die Teilchengröße der Pigmente ein wichtiger Parameter für die Kantenschärfe der Lasermarkierung. Randscharfe Markierungen werden erhalten, wenn die massengewichtete Teilchengröße der Pigmente 10 µm oder weniger, vorzugsweise 5 µm oder weniger und besonders bevorzugt 2 µm oder weniger beträgt, gemessen am D₉₀ mittels Laserbeugung. Die Partikel sind porös und bestehen aus Aggregaten von Primärpartikeln mit weniger als 100 nm Durchmesser, vorzugsweise weniger als 50 nm Durchmesser. Aber auch nicht oder nur wenig aggregierte Partikel mit einer spezifischen Oberfläche von 15 m²/g oder mehr sind für helle Lasermarkierungen geeignet. Allerdings sind die aggregierten Partikel mit Teilchengrößen über
500 nm, gemessen am D₉₀ mittels Laserbeugung, aus verarbeitungstechnischen Gründen bevorzugt.

Die Einsatzkonzentration des Pigmentes für die helle Lasermarkierung beträgt 0,005 - 1 % bezogen auf den Kunststoff, vorzugsweise 0,05 - 0,5 %. Aufgrund der geringen Eigenfarbe der Pigmente werden die koloristischen Eigenschaften der Kunststoffartikel unwesentlich oder nur im geringen Maße durch das Additiv beeinträchtigt.

Unter Einwirkung von Laserlicht zeigt das dotierte Polymer eine helle Markierung mit hohem Kontrast und ausgeprägter Kantenschärfe. Das bei anderen Verfahren zur hellen Markierung auftretende Aufschäumen und die damit einhergehende Aufrauung der Oberfläche wird nicht beobachtet.

Neben den hervorragenden optischen Eigenschaften, Kontrast und Kantenschärfe, ermöglichen die Laseradditive schnelle Markierungen mit hohen Pulsraten und verfügen über ein großes Prozessfenster bezogen auf die Lasereinstellungen. Über die Einstellung der Laserparameter lässt sich darüber hinaus die Helligkeit der Markierung bis hin zu dunklen Markierungen gezielt steuern. Allein über die Steuerung der Laserparameter (Leistung, Belichtungsdauer, Fokus) sind detailreiche farbige Halbtonbilder zugänglich. Das Verfahren zur Bilderzeugung ist ebenfalls Gegenstand der Erfindung.

Bevorzugte Laseradditive sind trägerfreies antimondotiertes Zinnoxid, fluoriddotiertes Zinnoxid und Indiumzinnoxid. Der Gehalt an Dotierstoffen im Zinnoxid beträgt 1 - 15 Mol%, vorzugsweise 3 - 10 Mol%. Das Indiumzinnoxid enthält 5 -15 Mol% Zinn.

Die Laserpigmente können schon bei der Herstellung
durch geeignete Prozessparameter als feinteiliges Pulver hoher spezifischer Oberfläche und mit Teilchengrößen von 10 µm oder weniger gewonnen werden. Es ist aber auch möglich größere Partikel oder größere Aggregate mit Hilfe geeigneter Mühlen, z. B. Luftstrahlmühlen und/oder Perlmühlen, auf die gewünschte Teilchengröße herunter zu mahlen. Das bevorzugte Mahlverfahren für die Feinstmahlung ist die Perlmühle.

Die Mahlung kann trocken als Pulvermahlung oder beispielsweise in wässriger Suspension in Gegenwart von Dispergierhilfsmitteln durchgeführt. Auf diesem Weg sind ca. 50 %ige wässrige Suspensionen der Pigmente zugänglich. Durch Sprühtrockung oder Gefriertrocknung lassen sich feinteilige Pulver mit hoher spezifischer Oberfläche isolieren.

Alternativ ist auch die Herstellung einer hydrophoben Zubereitung der Laserpigmente mit Hilfe geeigneter Lösemittel und/oder Schutzkolloide, beispielsweise durch Mahlen in Mineralöl oder Paraffin, möglich. Die erhaltene hydrophobe, pastöse oder feste Zubereitung kann dann in Lösungsmitteln redispergiert oder in Form von Chips direkt in den Kunststoff eingearbeitet werden.

Wegen der geringen Einsatzkonzentrationen der Laserpigmente in den Kunststoffzubereitungen ist es für die Dosierbarkeit vorteilhaft, zunächst eine stark verdünnte Zubereitung der Pigmente herzustellen. Dazu werden die Pigmente vorzugsweise mit einem inerten Stoff gestreckt, der keine Eigenfarbe hat und mit den Kunststoffen verträglich ist. Geeignete Verdünnungsmittel sind z. B. gefällte Kieselsäuren oder pyrogene Kieselsäuren oder anorganische Füllstoffe, wie z.B. Talkum, Kaolin oder Glimmer. Die Stoffe können vor der Feinmahlung zugesetzt werden oder auch danach.

In einer anderen vorteilhaften Ausführungsform wird zunächst ein Masterbatch des Kunststoffs mit einer höheren Konzentration des Pigmentes hergestellt und dieser dann als Granulat in geringer Menge der Hauptmasse des Kunststoffes bei der Kunststoffverarbeitung zugesetzt.

Ferner können den Polymeren Farbmittel zugesetzt werden, die eine breite farbliche Variation zulassen, besonders in den Farben Rot, Grün und Blau. Geeignete Farbmittel sind insbesondere organische Pigmente und Farbstoffe. Die Anwesenheit eines Farbmittels ist wesentlich für die Erkennbarkeit der hellen Markierung.

Als polymere Materialien sind insbesondere alle bekannten Kunststoffe, insbesondere Thermoplasten, ferner Duroplasten und Elastomere, wie z.B. im Ullmann, Bd. 15, S. 457 ff., Verlag VCH beschrieben, geeignet und können für die Lasermarkierung Anwendung finden. Geeignete thermoplastische Polymere sind z.B. Polyethylen, Polypropylen, Polyamide, Polyester, Polyetherester, Polyphenylenether, Polyacetal, Polybutylenterephthalat (PBT), Polyethylenterephthalat (PET), Polymethylmethacrylat, Polyvinylacetal, Polystyrol, Acrylnitril-Butadien-Styrol (ABS), Acrylnitril-Styrol-Acrylester (ASA), Styrol-Acrylnitril (SAN), Polycarbonat, Polyethersulfone und Polyetherketone sowie deren Copolymeren und/oder Mischungen, und/oder Polymerblends, wie z.B. PC/ABS, MABS.

Geeignete duroplastische Polymere sind z.B. Polyurethan, Melaminharze, Polyester und Epoxydharze.

Die Einarbeitung der Laserpigmente kann z.B. durch Compoundierung, über ein Masterbatch, über Pasten oder durch die direkte Zugabe beim formgebenden Verarbeitungsschritt (Direktpigmentierung) erfolgen. Dem Polymeren, vorzugsweise einem Kunststoffgranulat, können bei der Einarbeitung des Absorbers gegebenenfalls weitere Additive, wie z.B. Prozesshilfsmittel, Stabilisatoren, Flammschutzmittel, Füllstoffe und farbgebende Pigmente zugegeben werden. Die laborgemäße Herstellung der dotierten Kunststoffgranulate erfolgt in der Regel so, dass in einem geeigneten Mischer das Kunststoffgranulat vorgelegt, mit Dispergierhilfen benetzt und danach der Absorber und erforderliche Farbpigmente zugesetzt und untergemischt werden. In der industriellen Praxis erfolgt die Einfärbung und Additivierung des Polymeren in der Regel über ein Farbkonzentrat (Masterbatch) oder Compound. Dazu werden Farbpigmente und Additive unter hoher Scherung in Extrudern (üblicherweise gleichsinnig drehende Doppelschneckenextruder) in dem geschmolzenen Kunststoff dispergiert. Die Kunststoffschmelze tritt durch eine Lochplatte am Extruderkopf aus und wird durch geeignete Folgeeinrichtungen (z.B. Strangabschlagverfahren oder Unterwassergranulierung) zu Granulat verarbeitet. Das so erhaltene Granulat kann direkt in einem Extruder oder einer Spritzgießmaschine weiterverarbeitet werden. Die bei der Verarbeitung gebildeten Formkörper zeigen eine sehr homogene Verteilung des Absorbers. Anschließend findet die Lasermarkierung mit einem geeigneten Laser statt.

Gegenstand der Erfindung ist auch ein Verfahren zur Herstellung der erfindungsgemäßen dotierten polymeren Materialien, dadurch gekennzeichnet, dass ein polymeres Material mit dem Absorber gemischt und dann unter Wärmeeinwirkung verformt wird.

Neben den hervorragenden optischen Eigenschaften, Kontrast und Kantenschärfe, ermöglicht das feinteilige Laseradditiv
schnelle Markierungen mit hohen Pulsraten und verfügt über ein großes Prozessfenster bezogen auf die Lasereinstellungen. Über die Einstellung der Laserparameter lässt sich darüber hinaus die Helligkeit der Markierung bis hin zu dunklen Markierungen gezielt steuern. Allein über die Steuerung der Laserparameter sind detailreiche Halbtonbilder zugänglich. Das Verfahren zur Bilderzeugung ist ebenfalls Gegenstand der Erfindung.

Die Beschriftung des Polymeren mit dem Laser erfolgt derart, dass der Probenkörper in den Strahlengang eines gepulsten Lasers, vorzugsweise eines Nd:YAG-Lasers, YVO₄-Lasers oder 1064 nm-Faserlasers gebracht wird. Ferner ist eine Beschriftung mit einem Excimer-Laser, z.B. über eine Maskentechnik, möglich. Jedoch sind auch mit anderen herkömmlichen Lasertypen, die eine Wellenlänge in einem Bereich hoher Absorption des verwendeten Pigments aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im Allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und Nd:YAG-Laser (1064 bzw. 532 nm) oder gepulste UV-Laser erwähnt. Die Excimerlaser weisen folgende Wellenlängen auf: F₂-Excimerlaser (157 nm), ArF-Excimerlaser (193 nm), KrCI-Excimerlaser (222 nm), KrF-Excimerlaser (248 nm), XeCI-Excimerlaser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm), YVO₄-Laser, 1064 nm-Faserlaser oder CO₂-Laser eingesetzt. Die Energiedichten der eingesetzten Laser liegen im Allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im Allgemeinen im Bereich von 1 bis 100 kHz. Entsprechende Laser, die im erfindungsgemäßen Verfahren eingesetzt werden können, sind kommerziell erhältlich.

Das Laserschweißen erfolgt in der Weise, dass ein lasertransparentes Material mit einem laserabsorbierenden Material verschweißt wird. Als laserabsorbierendes Material kann das erfindungsgemäße Laseradditiv in Konzentrationen von 0,001 bis 10 Gew.%, vorzugsweise 0,001 bis 7 Gew.% und insbesondere 0,01 bis 3 Gew. %, bezogen auf das farbige Polymer zugesetzt werden. Für das Laserschweißen eignen sich vorzugsweise CW Diodenlaser oder Nd:YAG Laser bei Wellenlängen von 800 - 1100 nm, vorzugsweise von 808 - 1080 nm. Die Energiedichten der eingesetzten Laser liegen im Allgemeinen im Bereich von 0,3 mJ/cm² bis 200 J/cm², vorzugsweise 0,5 J/cm² bis 150 J/cm².

Die Verwendung des erfindungsgemäß dotierten farbigen Polymers kann auf allen Gebieten erfolgen, wo bisher übliche Schweißverfahren oder Druckverfahren zur Beschriftung oder zum Fügen von Kunststoffen eingesetzt werden. Beispielsweise können Formmassen, Halbzeuge und Fertigteile aus dem erfindungsgemäßen Polymeren in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäß dotiertem Polymeren bestehen, können selbst an schwer zugänglichen Stellen mit Hilfe von Laserlicht markiert werden. Weiterhin kann das erfindungsgemäße Polymersystem bei Verpackungen im Lebensmittelbereich oder im Spielzeugbereich eingesetzt werden. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar sind. Komplette Etikettenbilder können dauerhaft auf die Verpackung für ein Mehrwegsystem aufgebracht werden. Weiterhin findet das erfindungsgemäße Polymersystem Anwendung in der Medizintechnik, beispielsweise bei der Markierung von Petrischalen, Mikrotiterplatten, Einmalspritzen, Ampullen, Probenbehältern, Versorgungsschläuchen und medizinische Auffangbeuteln bzw. Vorratsbeuteln.

Ein weiteres wichtiges Anwendungsgebiet für die Laserbeschriftung sind Kunststoffmarken zur individuellen Kennzeichnung von Tieren, sogenannten Tierohrmarken, und von Produkten, sogenannte Sicherheitsplomben. Über ein Barcodesystem werden die Informationen gespeichert, welche spezifisch dem Tier oder dem Produkt zugehörig sind. Diese können bei Bedarf wieder mit Hilfe eines Scanners abgerufen werden. Die Beschriftung muss sehr dauerhaft werden, da die Ohrmarken teilweise über mehrere Jahre an den Tieren verbleiben.

Die Lasermarkierung von Formmassen, Halbzeugen und Fertigteilen, die aus dem erfindungsgemäßen Polymer bestehen, ist somit möglich.

Die folgenden Beispiele sollen die Erfindung erläutern ohne sie jedoch zu begrenzen. Die angegebenen Prozentangaben sind Gewichtsprozent. In der Anmeldung wird die spezifische Oberfläche (BET-Oberfläche durch Stickstoffadsorption) der erfindungsgemäßen Laseradditive bestimmt mit dem Gerät Typ ASAP 2420 der Firma Micrometrics.

Alle D₁₀-, D₅₀- und D₉₀-Werte in dieser Anmeldung werden mittels Laserbeugung mit dem Gerät Malvern Mastersizer 2000 bestimmt.

### Beispiele

### Beispiel 1: Antimondotiertes Zinnoxid mit großer spezifischer Oberfläche

In eine Vorlage von 1,5 Liter verdünnter Salzsäure in einem Rührreaktor wird bei 60 °C unter starkem Rühren eine Mischung aus 446 g einer 50 Gew.%igen wässrigen SnCl₄-Lösung, 135 ml HCl (37 Gew.%), 96,5 g einer 35 Gew.%igen wässrigen SbCl₃-Lösung über 90 min kontinuierlich zu der Suspension zudosiert. Durch gleichzeitige Zudosierung von Natronlauge wird der pH-Wert bei pH 2 konstant gehalten. Nach Zugabe der Gesamtmenge der Lösung wird noch 30 min bei 60 °C nachgerührt, anschließend unter Rühren auf Raumtemperatur abgekühlt und das erhaltene Pigment über eine Nutsche abfiltriert, mit Wasser gewaschen, bei 140 °C getrocknet und 30 min bei 700 °C unter Luft geglüht. Man erhält ein graues Pigmentpulver. Das Verhältnis Sn:Sb in der Beschichtung beträgt ca. 92:8. Das Röntgendiffraktogramm des Pigmentes zeigt nur Kassiterit. Das Pigmentpulver wird in einer Planetenkugelmühle mit Zirkonkugeln gemahlen und gesiebt. Die Teilchengrößenverteilung wird mittels Laserbeugung auf einem Malvern Mastersizer 2000 vermessen. Das Produkt hat ein volumengewichtetes D₉₀ von 9,1 µm und ein D₁₀ von 1,8 µm. Von dem Pigment wird die BET-Oberfläche durch Stickstoffadsorption mit einem Gerät von Typ ASAP 2420 der Firma Micrometrics bestimmt. Die spezifische Oberfläche (BET) beträgt 52 m²/g.

### Beispiel 2: Antimondotiertes Zinnoxid mit mittlerer spezifischer Oberfläche

Es wird ein Pigment hergestellt, indem die Vorschrift aus Beispiel 1 in den Parametern Temperatur und Dosiergeschwindigkeit der Edukte modifiziert wird. Bei einer Temperatur von 80 °C und einer Zudosierung der Edukte über 6 Stunden wird ein Pigment mit einer spezifischen Oberfläche von 17 m2/g erhalten.

### Beispiel 3: Antimondotiertes Zinnoxid mit großer spezifischer Oberfläche

In eine Vorlage von 1,5 Liter verdünnter Salzsäure in einem Rührreaktor wird bei 40 °C unter starkem Rühren eine Mischung aus 465 g einer 50 Gew.%igen wässrigen SnCl₄-Lösung, 135 ml HCl (37 Gew.%), 48,2 g einer 35 Gew.%igen wässrigen SbCl₃-Lösung über 90 min zu der Suspension bei pH 1,6 zudosiert. Nach Zugabe der Gesamtmenge der Lösung wird noch 30 min bei 40 °C nachgerührt, anschließend unter Rühren abgekühlt und das erhaltene Pigment über eine Nutsche abfiltriert, mit Wasser gewaschen, bei 140 °C getrocknet und 30 min bei 700 °C unter Luft geglüht. Man erhält ein blaugraues Pigmentpulver. Das Verhältnis Sn:Sb in der Beschichtung beträgt ca. 96:4. Das Pigmentpulver wird in einer Kugelmühle gemahlen und danach gesiebt. Die Teilchengrößenverteilung wird mittels Laserbeugung (Malvern Mastersizer 2000) vermessen. Das Produkt hat ein volumengewichtetes D₉₀ von 7,4 µm) und ein D₁₀ von 0,9 µm, die spezifische Oberfläche (BET) beträgt 38 m²/g. Unter dem Rasterelektronenmikroskop findet man stark aggregierte Partikel mit Primärteilchen von 30 - 40 nm Größe.

### Beispiel 4: ITO - Pigment

20 g gelbes ITO-Nanopulver der Fa. Nanoni Materials&Technology wird in einem Rohrofen 45 min bei 450 °C unter Formiergas (5% H₂) geglüht, anschließend gemahlen und gesiebt. Man erhält ein blaugraues Pulver mit einer BET-Oberfläche von 25 m²/g und einer Teilchengröße der Aggregate von 8 µm (D₉₀). Die Primärteilchen sind < 50 nm (REM).

### Beispiel 5: Vergleichsbeispiel

In eine Vorlage von 1,5 Liter verdünnter Salzsäure in einem Rührreaktor wird bei 80 °C unter starkem Rühren eine Mischung aus 110 ml Salzsäure (37 % HCl), 357,7 g SnCl₂-Lösung (49 Gew.% SnCl₂) und 52,1 g SbCl₃-Lösung (35 Gew.%) und 130 g einer 30%igen Wasserstoffperoxid-Lösung über 8 Stunden zudosiert. Nach Zugabe der Gesamtmenge der Lösung wird noch 30 min nachgerührt, anschließend unter Rühren auf Raumtemperatur abgekühlt und die Reaktionsmischung auf pH 3 gestellt. Das erhaltene Pigment wird über eine Nutsche abfiltriert, mit Wasser gewaschen, bei 140 °C getrocknet und 30 min. bei 800 °C unter Luft geglüht. Man erhält ein graues Pigmentpulver. Das Verhältnis Sn:Sb in der Beschichtung beträgt ca. 92:8. Das Röntgendiffraktogramm des Pigmentes zeigt nur Kassiterit. Das Pigmentpulver wird in einer Planetenkugelmühle mit Zirkonkugeln gemahlen und gesiebt. Das Produkt hat ein volumengewichtetes D₉₀ von 8,3 µm, die spezifische Oberfläche (BET) beträgt 11,8 m²/g.

### Beispiel 6:

1 kg PP-Granulat (Metocene 648T, Fa. Basell) wird mit 2 g Dispergierhilfe (Process-Aid 24, Fa. Colormatrix) im Trommelmischer benetzt. Anschließend werden 5 g des Pigmentes aus Beispiel 1 und 1 g organisches grünes Farbpigment (PV Fast Echtgrün GG01, Fa. Clariant) zugegeben und 2 min im Trommelmischer untergemischt. Die erhaltene Mischung wird im gleichsinnig drehenden Doppelschneckenextruder unter hoher Scherung bei 250-260 °C Manteltemperatur compoundiert, durch eine Lochdüse zu einem Strang geformt, im Wasserbad abgekühlt und durch ein rotierendes Messer granuliert. Der erhaltene Compound wird bei 100 °C 1h getrocknet und auf einer Spritzgussmaschine zu Plättchen mit den Abmessungen 60 mm x 90 mm x 1,5 mm (BxHxT) verarbeitet. Die Kunststoffplättchen werden anschließend mit einem gepulsten YVO₄-Laser mit 1064 nm Wellenlänge und einer maximalen Ausgangsleistung von 10,5 W lasermarkiert. Das Testraster variiert die Geschwindigkeit zwischen 500 und 5000 mm/s und die Frequenz zwischen 20 und 100 kHz. Es werden gefüllte Flächen mit einem Linienabstand von 50 µm und darüber hinaus Linienschrift gelasert. Es werden stabile helle Lasermarkierungen bis zu einer Geschwindigkeit von 3000 mm/s erhalten. Die Linienmarkierung ist sehr definiert und detailgetreu und bestätigt die homogene Verteilung des Additivs.

### Beispiel 7:

Mit dem Verfahren aus Beispiel 3 werden Kunststoffplättchen hergestellt, die das Laserpigment aus Beispiel 2 enthalten. Die Plättchen werden analog Beispiel 6 gelasert. Auch hier werden stabile und detailgetreue helle Markierungen erhalten.

### Beispiel 8: Helle Markierung mit ITO

990 g PE-Granulat werden mit 2 g Dispergierhilfe (Process-Aid 24) im Trommelmischer benetzt. Anschließend werden 1 g des Pigmentes aus Beispiel 4 und 10 g dunkelbraun eingefärbtes Masterbatch (Polyone 2001-BN-50 PE) zugegeben und 2 min im Trommelmischer untergemischt. Die erhaltene Mischung wird im gleichsinnig drehenden Doppelschneckenextruder unter hoher Scherung bei 250-260 °C Manteltemperatur compoundiert, durch eine Lochdüse zu einem Strang geformt, im Wasserbad abgekühlt und durch ein rotierendes Messer granuliert. Der erhaltene Compound wird bei 100 °C 1h getrocknet und auf einer Spritzgussmaschine zu Plättchen mit den Abmessungen 60 mm x 90 mm x 1,5 mm (BxHxT) verarbeitet. Die rotbraunen Kunststoffplättchen werden analog Beispiel 6 beschrieben lasermarkiert. Auch hier werden einwandfreie helle Lasermarkierungen bis zu einer Geschwindigkeit von 3000 mm/s erhalten. Die Linienmarkierung ist sehr definiert und detailgetreu.

### Beispiel 9: Vergleichsbeispiel ohne Farbmittel

Es werden Kunststoffplättchen nach dem in Beispiel 6 beschriebenen Verfahren hergestellt, jedoch ohne Zugabe des grünen Farbpigments PV Fast Echtgrün GG01. Auf diese Weise werden helle opake Kunststoffplättchen erhalten. Diese werden wie in Beispiel 6 beschrieben gelastert. Beim genauen Betrachten der Oberfläche kann man auch hier eine hell erscheinende Markierung erkennen, jedoch ohne einen nennenswerten Kontrast zum Hintergrund. Die Markierung ist nur schwer zu erkennen und für eine praktische Verwendung unbrauchbar. Der Versuch zeigt, dass das Pigment im Kunststoff nur in Kombination mit einem Farbmittel eine brauchbare helle Markierung ergibt.

### Beispiel 10: Vergleichsbeispiel - Pigment mit geringer spezifischer Oberfläche

1 kg PP-Granulat (Metocene 648T, Fa. Basell) wird mit 2 g Dispergierhilfe (Process-Aid 24, Fa. Colormatrix) im Trommelmischer benetzt. Anschließend werden 5 g des Pigmentes aus Beispiel 5 und 1 g organisches grünes Farbpigment (PV Fast Echtgrün GG01) zugegeben und 2 min im Trommelmischer untergemischt. Die erhaltene Mischung wird analog Beispiel 6 zu Plättchen mit den Abmessungen 60 mm x 90 mm x 1,5 mm (BxHxT) verarbeitet und lasermarkiert. Es werden hellgraue bis dunkelgraue Markierungen bis zu einer Geschwindigkeit von 3000 mm/s erhalten. Die dunklen Schriften sind auf dem dunklen Hintergrund schlecht zu erkennen. Das Ergebnis zeigt, dass ATO-Pigmente mit einer spezifischen Oberfläche von weniger als 15 m²/g keine einwandfreien hellen Markierungen ergeben.

## Patentansprüche

1. Lasermarkierbare und/oder laserschweißbare Polymere, **dadurch gekennzeichnet, dass** das Polymer mindestens ein Farbmittel und als Absorber (Laseradditiv) mindestens ein mit Fluor dotiertes Zinnoxid (FTO), mit Antimon dotiertes Zinnoxid (ATO) oder Indiumzinnoxid mit einer spezifischen Oberfläche (BET, N₂-Absorption) von mindestens 15 m²/g enthält und der Gehalt eines oder mehrerer Dotierstoffe im Zinnoxid 1-15 Mol% bezogen auf das Zinnoxid beträgt und der Absorber in Form aggregierter Partikel vorliegt mit Teilchengrößen über 500 nm gemessen am D₉₀ mittels Laserbeugung.

2. Lasermarkierbare und/oder laserschweißbare Polymere nach Anspruch 1, **dadurch gekennzeichnet, dass** der Absorber eine Anzahlgewichtete Teilchengröße von < 5 µm, gemessen am D₉₀ mittels Laserbeugung (bestimmt mit Malvern Mastersizer 2000) aufweist.

3. Lasermarkierbare und/oder laserschweißbare Polymere nach Anspruch 1 oder 2, **dadurch gekennzeichnet, dass** das Laseradditiv in Konzentrationen von 0,005 bis 1 Gew.% bezogen auf das Polymer eingesetzt wird.

4. Lasermarkierbare und/oder laserschweißbare Polymere nach einem oder mehreren der Ansprüche 1 bis 3, **dadurch gekennzeichnet, dass** das Polymer ein Thermoplast, Duroplast oder Elastomer ist.

5. Lasermarkierbare und/oder laserschweißbare Polymere nach einem oder mehreren der Ansprüche 1 bis 4, **dadurch gekennzeichnet, dass** das Farbmittel organische Pigmente und Farbstoffe sind.

6. Verfahren zur Herstellung von lasermarkierbaren und/oder laserschweißbaren Polymeren nach einem oder mehreren der Ansprüche 1 bis 5, **dadurch gekennzeichnet, dass** die Zugabe des Laseradditivs durch Compoundierung, über ein Masterbatch oder über Pasten oder durch die direkte Zugabe dem Polymer gleichzeitig oder nacheinander erfolgt und gegebenenfalls eine oder mehrere Additive zugesetzt werden und dann das Polymer unter Wärmewirkung verformt wird.

7. Verwendung der lasermarkierbaren und/oder laserschweißbaren Polymere nach einem oder mehreren der Ansprüche 1 bis 5 als Material zur Herstellung von Formmassen, Halbzeugen, Fertigteilen und zur Bilderzeugung.

8. Formmassen, Halbzeuge und Fertigteile bestehend aus dem lasermarkierbaren und laserschweißbaren Polymer nach einem oder mehreren der Ansprüche 1 bis 5.

## Claims

1. Laser-markable and/or laser-weldable polymers, **characterised in that** the polymer comprises at least one colorant and, as absorber (laser additive), at least one fluorine-doped tin oxide (FTO), antimony-doped tin oxide (ATO) or indium tin oxide (ITO) having a specific surface area (BET, N₂ absorption) of at least 15 m²/g and the content of one or more dopants in the tin oxide is 1-15 mol%, based on the tin oxide, and the absorber is in the form of aggregated particles having particle diameters sizes greater than 500 nm, measured at the D₉₀ by means of laser diffraction.

2. Laser-markable and/or laser-weldable polymers according to Claim 1, **characterised in that** the absorber has a number weighted particle size of < 5 µm, measured at the D₉₀ by means of laser diffraction (determined using a Malvern Mastersizer 2000).

3. Laser-markable and/or laser-weldable polymers according to Claim 1 or 2, **characterised in** the laser additive is employed in concentrations of 0.005 to 1% by weight, based on the polymer.

4. Laser-markable and/or laser-weldable polymers according to one or more of Claims 1 to 3, **characterised in that** the polymer is a thermoplastic, thermoset or elastomer.

5. Laser-markable and/or laser-weldable polymers according to one or more of Claims 1 to 4, **characterised in that** the colorants are organic pigments and dyes.

6. Process for the preparation of laser-markable and/or laser-weldable polymers according to one or more of Claims 1 to 5, **characterised in that** the addition of the laser additive is carried out simultaneously or successively by compounding, via a masterbatch or via pastes or by direct addition to the polymer, and one or more additives are optionally added and the polymer is then shaped under the action of heat.

7. Use of the laser-markable and/or laser-weldable polymers according to one or more of Claims 1 to 5 as material for the production of moulding compositions, semi-finished products, finished parts and for imaging.

8. Moulding compositions, semi-finished products and finished parts consisting of the laser-markable and laser-weldable polymer according to one or more of Claims 1 to 5.

## Revendications

1. Polymères marquables au laser et/ou soudables au laser, **caractérisés en ce que** le polymère comprend au moins un colorant et, en tant qu'absorbeur (additif laser), au moins un oxyde d'étain dopé au fluor (FTO), un oxyde d'étain dopé à l'antimoine (ATO) ou un oxyde d'étain-indium (ITO) ayant une surface spécifique (BET, adsorption de N₂) d'au moins 15 m²/g et la teneur d'un ou plusieurs dopants dans l'oxyde d'étain est de 1-15% molaire, sur la base de l'oxyde d'étain, et l'absorbeur se présente sous la forme de particules agrégées ayant des tailles de diamètre de particules supérieures à 500 nm, mesurées au D₉₀ par diffraction laser.

2. Polymères marquables au laser et/ou soudables au laser selon la revendication 1, **caractérisés en ce que** l'absorbeur présente une taille de particules pondérée en nombre < 5 µm, mesurée au D₉₀ par diffraction laser (déterminée à l'aide d'un Malvern Mastersizer 2000).

3. Polymères marquables au laser et/ou soudables au laser selon la revendication 1 ou 2, **caractérisés en ce que** l'additif laser est employé selon des concentrations allant de 0,005 à 1% en poids, sur la base du polymère.

4. Polymères marquables au laser et/ou soudables au laser selon l'une ou plusieurs parmi les revendications 1 à 3, **caractérisés en ce que** le polymère est un thermoplastique, un thermorigide ou un élastomère.

5. Polymères marquables au laser et/ou soudables au laser selon l'une ou plusieurs parmi les revendications 1 à 4, **caractérisés en ce que** les colorants sont des pigments et des colorants organiques.

6. Procédé de préparation de polymères marquables au laser et/ou soudables au laser selon l'une ou plusieurs parmi les revendications 1 à 5, **caractérisé en ce que** l'addition de l'additif laser est réalisée simultanément ou successivement par compoundage, via un mélange maître ou via des pâtes ou par addition directe au polymère, et un ou plusieurs additifs sont éventuellement ajoutés et le polymère est ensuite mis en forme sous l'action de la chaleur.

7. Utilisation des polymères marquables au laser et/ou soudables au laser selon l'une ou plusieurs parmi les revendications 1 à 5, comme matériau pour la production de compositions de moulage, de produits semi-finis, de pièces finies et pour l'imagerie.

8. Compositions de moulage, produits semi-finis et pièces finies, constitués du polymère marquable au laser et soudable au laser selon l'une ou plusieurs parmi les revendications 1 à 5.
